# EUROPÄISCHE PATENTSCHRIFT

(11) **EP 4 189 034 B1**
(45) Veröffentlichungstag und Bekanntmachung des Hinweises auf die Patenterteilung: **08.10.2025**
(21) Anmeldenummer: 21758310.3
(22) Anmeldetag: 02.08.2021
(51) Int. Cl.: C09K 17/52

(54) **MULCHMATERIAL ZUR UNTERDRÜCKUNG VON UNKRAUT, MEHRKOMPONENTENSYSTEM SOWIE VORRICHTUNG UND VERFAHREN ZUM AUFBRINGEN EINES FLÜSSIGEN MULCHMATERIALS**
MULCH MATERIAL FOR SUPPRESSING WEEDS, MULTICOMPONENT SYSTEM AND DEVICE AND METHOD FOR APPLYING A LIQUID MULCH MATERIALS
MATÉRIAU DE PAILLIS POUR SUPPRIMER LES MAUVAISES HERBES, SYSTÈME À CONSTITUANTS MULTIPLES ET DISPOSITIF ET PROCÉDÉ POUR APPLIQUER UN MATÉRIAU DE PAILLIS LIQUIDE

(30) Priorität: 31.07.2020 DE 102020004663
(43) Veröffentlichungstag der Anmeldung: 07.06.2023
(73) Patentinhaber: Technologie- und Förderzentrum im Kompetenzzentrum für Nachwachsende Rohstoffe, 94315 Straubing (DE)
(72) Erfinder: KIRCHINGER, Michael, 94315 Straubing (DE); EMBERGER, Peter, 94315 Straubing (DE); FEDENEDER, Simone, 94356 Kirchroth (DE); HAFNER, Josef, 94559 Niederwinkling (DE); REMMELE, Edgar, 94315 Straubing (DE); WIDMANN, Bernhard, 94315 Straubing (DE)
(74) Vertreter: Launhardt, Thomas
(86) Internationale Anmeldenummer: PCT/DE2021/100663
(87) Internationale Veröffentlichungsnummer: WO 2022/022783

(56) Entgegenhaltungen:
- DE-A1- 102017 126 351
- DE-A1- 102017 214 783
- US-A1- 2002 100 819
- IMMIRZI B ET AL: "Preparation, characterisation and field-testing of a biodegradable sodium alginate-based spray mulch", BIOSYSTEMS ENGINEERING, ELSEVIER, AMSTERDAM, NL, vol. 102, no. 4, 1 April 2009 (2009-04-01), pages 461 - 472, XP026031674, ISSN: 1537-5110, [retrieved on 20090207], DOI: 10.1016/J.BIOSYSTEMSENG.2008.12.008

## Beschreibung

Die vorliegende Offenbarung umfasst ein Mulchmaterial zur Unterdrückung von Unkraut und ein Mehrkomponentensystem zur Herstellung eines Mulchmaterials. Darüber hinaus umfasst die vorliegende Offenbarung eine Vorrichtung sowie ein Verfahren zum Aufbringen eines flüssigen Mulchmaterials auf einem Boden.

Als Unkraut werden üblicherweise Pflanzen der spontanen Begleitvegetation in Kulturpflanzenbeständen, Grünland oder Gartenanlagen bezeichnet, welche dort nicht gezielt angebaut werden und aus dem Samenpotential des Bodens, über Wurzelausläufer oder über Zuflug der Samen zur Entwicklung kommen.

Durch den Wuchs von Unkraut kann es zu einer Konkurrenzsituation mit einem Pflanzenbestand hinsichtlich Nährstoff-, Licht- und/oder Wasseraufnahme kommen. Auch kann der Wuchs von Unkraut ein Pilzwachstum bei dem Pflanzenbestand fördern, beispielsweise, wenn aufgeschossenes Unkraut die Abtrocknung der Blätter des Pflanzenbestandes und/oder seines Ernteguts verhindert. Aus diesen Gründen ist man beispielsweise im Pflanzenbau bestrebt, einem Wuchs von Unkraut entgegenzuwirken.

Aus IMMIRZI et al.: "Preparation, characterisation and field-testing of a biodegradable sodium alginate-based spray mulch", Biosystems Engineering, Elsevier, Amsterdam, NL, Bd. 102, Nr. 4, 1. April 2009 ist ein Mulchmaterial bekannt. Aus der US 2002/100819 A1 ist eine Vorrichtung zum Aufbringen eines flüssigen Mulchmaterials auf einem Boden bekannt. Weitere Vorrichtungen zum Aufbringen eines flüssigen Mulchmaterials auf einem Boden sind aus der DE 10 2017 126 351 A1 und der DE 2017 214 783 A1 bekannt.

Eine Aufgabe kann darin gesehen werden, ein Konzept vorzuschlagen, durch welches der Wuchs von Unkraut zumindest unterdrückt werden kann. Insbesondere soll das Konzept geeignet sein, im Pflanzenbau genutzt zu werden.

Die Aufgabe wird mit einem Mulchmaterial gelöst, welches die Merkmale des Anspruches 1 aufweist. Die Aufgabe wird ferner mit einem Mehrkomponentensystem gelöst, welches die Merkmale des Anspruches 7 aufweist. Darüber hinaus werden zur Lösung der Aufgabe eine Vorrichtung mit den Merkmalen des Anspruchs 10, eine Vorrichtung mit den Merkmalen des Anspruchs 11 und ein Verfahren mit den Merkmalen des Anspruchs 12 vorgeschlagen. Weiterhin werden zur Lösung der Aufgabe eine Verwendung mit den Merkmalen des Anspruchs 13, eine Verwendung mit den Merkmalen des Anspruches 14 und eine Verwendung mit den Merkmalen des Anspruchs 15 vorgeschlagen.

Vorteilhafte Ausführungsformen und/oder Ausgestaltungen und/oder Aspekte ergeben sich aus den Unteransprüchen, der nachfolgenden Beschreibung und den Figuren.

Nach einem Aspekt wird ein Mulchmaterial bereitgestellt, welches zur Unterdrückung von Unkraut geeignet ist oder dient. Das Mulchmaterial enthält ein Triglycerid und insbesondere ein Glycerin. Das Mulchmaterial enthält ferner ein Polyuronid und/oder ein Derivat einer Polyuronsäure und ein Gelierhilfsmittel. Weiterhin enthält das Mulchmaterial eine Stärke und/oder ein Stärkederivat und/oder ein Polysaccharid basierend auf Mannose und/oder Galactose. Darüber hinaus enthält das Mulchmaterial insbesondere Wasser. Auch kann es vorgesehen sein, dass das Mulchmaterial aus einem Triglycerid und insbesondere einem Glycerin, aus einen Polyuronid und/oder einem Derivat einer Polyuronsäure, aus einem Gelierhilfsmittel, aus einer Stärke und/oder einem Stärkederivat und/oder einem Polysaccharid basierend auf Mannose und/oder Galactose und aus Wasser besteht.

Bei dem Mulchmaterial ist zugrunde gelegt, dass das Polyuronid bzw. das Derivat der Polyuronsäure mit dem Gelierhilfsmittel und unter Mitwirkung zumindest eines Teiles des Wassers geliert, also ein Netzwerk ausbildet. Das Triglycerid bzw. das Glycerin ist darin zumindest teilweise eingebunden oder damit zumindest teilweise verzahnt. Auch die Stärke bzw. das Stärkederivat bzw. das Polysaccharid ist darin zumindest teilweise eingebunden oder damit zumindest teilweise verzahnt. Durch seine Bestandteile liegt das Mulchmaterial insbesondere als gelartige und/oder klebrige und/oder milchige Substanz vor.

In Praxisversuchen wurde das Mulchmaterial auf Bodenflächen ausgebracht. Es hat sich gezeigt, dass durch das Mulchmaterial ein Wachstum von Unkraut wirksam behindert oder gar verhindert ist. Es hat sich beispielsweise gezeigt, dass das Mulchmaterial als physikalische Barriere gegen Unkraut wirkt. Auch hat es sich beispielsweise gezeigt, dass durch das Mulchmaterial bereits einem Quellen und Keimen der Samen des Unkrauts entgegengewirkt ist. Denn es konnte beobachtet werden, dass durch das Mulchmaterial der Lichteinfall auf den Boden vermindert ist, insbesondere erheblich vermindert ist. Auch konnte beobachtet werden, dass durch das Mulchmaterial der Wassereintrag in den Boden reduziert ist, insbesondere erheblich reduziert ist.

Sofern auf den Bodenflächen bereits ein gewisser Bewuchs mit Unkraut vorlag, hat sich gezeigt, dass durch das Mulchmaterial ein Absterben des Bewuchses begünstigt wird. Denn es konnte beobachtet werden, dass das Mulchmaterial im Laufe der Zeit wenigstens einen Bestandteil, wie beispielsweise das Triglycerid bzw. das Glycerin, teilweise absondert und die Stomata der Blätter des Bewuchses verstopft oder verklebt, mit der Folge, dass dadurch der Gasaustausch über das Blatt beeinträchtigt wurde.

Insgesamt konnte bei dem Mulchmaterial ein unterdrückender Effekt gegen junges, frisch austreibendes Unkraut und ebenso gegen bereits etablierten Bewuchs von Unkraut beobachtet werden. Weiterhin konnte beobachtet werden, dass das Mulchmaterial an dem Unkraut regelrecht geklebt hat. Durch diese Haftwirkung ergab sich eine relativ lange Einwirkzeit des Mulchmaterials an dem Bewuchs. Diese Haftwirkung konnte auch gegenüber dem Erdreich des Bodens beobachtet werden. Einem Aufwirbeln oder Wegfliegen des Mulchmaterials aufgrund von Winden ist dadurch entgegengewirkt.

Es hat sich gezeigt, dass sich das aufgebrachte Mulchmaterial wie eine Schicht auf den Boden und etwaigem darauf befindlichen Bewuchs legt und bedeckt. Es hat sich ferner gezeigt, dass das Mulchmaterial im getrockneten Zustand günstige elastische Eigenschaften hat. Beispielsweise war ein mit dem Mulchmaterial versehener Boden auch nach einem Abtrocknen des Mulchmaterials durch eine Person begehbar, ohne dass es zu einer erheblichen Schädigung oder gar Zerstörung der Mulchschicht kam.

Insbesondere ist das Mulchmaterial biologisch abbaubar. Durch die Stärke bzw. das Stärkederivat bzw. das Polysaccharid ist es ermöglicht, dass das Mulchmaterial in seiner Wirkung gegen Unkraut über eine Vegetationsperiode, insbesondere über eine Zeitdauer von der Aussaat bzw. dem Austreiben eines vorhandenen Pflanzenbestandes bis zur Ernte, stabil oder zumindest weitgehend stabil bleibt. Durch die Stärke bzw. das Stärkederivat bzw. das Polysaccharid ist es ferner ermöglicht, dass nach der einen Vegetationsperiode das Mulchmaterial sich biologisch abbaut und, ohne relevante Reste des Mulchmaterials, der Boden für eine darauffolgende Vegetationsperiode vorbereitet werden kann.

Dadurch bietet sich das Mulchmaterial unter anderem für eine Nutzung im Pflanzenbau an, um beispielsweise auf dem dafür vorgesehenen Boden aufgebracht zu werden. Unter der Bezeichnung "Pflanzenbau" ist in der vorliegenden Offenbarung insbesondere ein, vorzugsweise planmäßiger, landwirtschaftlicher oder gartenbaulicher Anbau von Nutzpflanzen und/oder Zierpflanzen zu verstehen.

Unter der Bezeichnung "Boden" ist in der vorliegenden Offenbarung insbesondere ein Boden zu verstehen, der für die landwirtschaftliche und/oder gartenbauliche Nutzung dient. Darüber hinaus bietet sich das Mulchmaterial für eine Nutzung im Obstbau und/oder Weinbau an, um beispielsweise auf dem dafür vorgesehenen Boden, insbesondere im Stamm- und/oder Stockbereich, aufgebracht zu werden.

Um die Stabilität des Mulchmaterials über den gewünschten Zeitraum zu gewährleisten und den gewollten biologischen Abbau ohne zeitliche Verzögerung zu erreichen, ist es vorgesehen, dass das Mulchmaterial arm an Kautschuk oder frei von Kautschuk ist. Auch ist es vorgesehen, dass das Mulchmaterial arm an Protein oder frei von Protein ist. Dadurch ist es begünstigt, dass das Mulchmaterial eine gewisse Gasdurchlässigkeit und/oder Wasserdurchlässigkeit aufweist, welche gewollt ist.

Unter der Bezeichnung "Kautschuk" sind in der vorliegenden Offenbarung insbesondere Kohlenwasserstoffpolymere zu verstehen. Derartige Kohlenwasserstoffe können als Naturlatex oder Naturkautschuk als nachwachsende Rohstoffe in der Natur vorhanden sein und beispielsweise aus Bäumen oder anderen Pflanzen gewonnen werden. Derartige Kohlenwasserstoffe können auch synthetisch hergestellt sein und beispielsweise ähnliche Eigenschaften wie Naturlatex oder Naturkautschuk aufweisen.

Unter der Bezeichnung "arm an Kautschuk" ist in der vorliegenden Offenbarung insbesondere ein Massenanteil an Kautschuk von bis zu 12 Prozent, insbesondere bis zu 11 Prozent, insbesondere bis zu 9 Prozent, insbesondere bis zu 8 Prozent, insbesondere bis zu 7 Prozent, insbesondere bis zu 6 Prozent, insbesondere bis zu 5 Prozent, insbesondere bis zu 4 Prozent, insbesondere bis zu 3 Prozent, insbesondere bis zu 2 Prozent, insbesondere bis zu 1 Prozent, vorzugsweise bis zu 10 Prozent, bezogen auf die Trockenmasse des Mulchmaterials, zu verstehen. Unter der Bezeichnung "frei von Kautschuk" ist in der vorliegenden Beschreibung insbesondere ein Massenanteil an Kautschuk von 0 Prozent, vorzugsweise 0,0 Prozent zu verstehen.

Unter der Bezeichnung "Protein" ist in der vorliegenden Offenbarung insbesondere ein Protein und ein Proteinisolat, wie beispielsweise Sojaprotein, und eine Mischung davon umfasst. Unter der Bezeichnung "arm an Protein" ist in der vorliegenden Offenbarung insbesondere ein Massenanteil an Protein von bis zu 12 Prozent, insbesondere bis zu 11 Prozent, insbesondere bis zu 9 Prozent, insbesondere bis zu 8 Prozent, insbesondere bis zu 7 Prozent, insbesondere bis zu 6 Prozent, insbesondere bis zu 5 Prozent, insbesondere bis zu 4 Prozent, insbesondere bis zu 3 Prozent, insbesondere bis zu 2 Prozent, insbesondere bis zu 1 Prozent, vorzugsweise bis zu 10 Prozent, bezogen auf die Trockenmasse des Mulchmaterials, zu verstehen. Unter der Bezeichnung "frei von Protein" ist in der vorliegenden Offenbarung insbesondere ein Massenanteil an Kautschuk von 0 Prozent, vorzugsweise 0,0 Prozent zu verstehen.

Das Triglycerid kann ein Öl oder ein Fett sein oder ein Öl und/oder ein Fett enthalten. Das Triglycerid kann ferner tierischer oder pflanzlicher Herkunft sein. Insbesondere ist oder enthält das Triglycerid ein Pflanzenöl, wie beispielsweise ein Sonnenblumenöl, ein Mohnöl, ein Leinöl, ein Leindotteröl, ein Rapsöl, ein Sojaöl, ein Palmöl, ein Palmkernöl, ein Kokosöl und/oder ein Maisöl. Auch das Glycerin kann tierischer oder pflanzlicher Herkunft sein.

Das Polyuronid kann ein Alginat oder ein Pektin sein oder ein Alginat und/oder ein Pektin enthalten. Beispielsweise ist das Alginat ein Natriumalginat oder ein Kaliumalginat. Beispielsweise ist das Pektin ein niedrigmethyliertes Pektin.

Das Derivat der Polyuronsäure kann ein Derivat einer Alginsäure oder ein Derivat einer Galacturonsäure sein oder ein Derivat einer Alginsäure und/oder ein Derivat einer Galacturonsäure enthalten. Es hat sich gezeigt, dass dadurch eine Gelierung bzw. Verdickung bei höheren pH-Werten begünstigt ist. Das Pektin kann aus pflanzlichen Rohstoffen gewonnen sein, beispielsweise aus Apfel- und/oder Citrus- und/oder Rübentrester.

Das Gelierhilfsmittel kann ein Calciumsalz oder ein divalentes Kation sein oder ein Calciumsalz und/oder ein divalentes Kation enthalten. Diese Substanz, wie beispielsweise das Calciumsalz, kann zumindest teilweise aus dem Wasser kommen, beispielsweise wenn das Wasser ein Leitungswasser ist.

Das Wasser ist bevorzugt ein Leitungswasser, da es in großer Menge und/oder kostengünstig bereitgestellt werden kann. Grundsätzlich kann das Wasser auch ein in der Natur vorkommendes Wasser, wie beispielsweise ein Quellwasser, ein destilliertes Wasser, ein demineralisiertes Wasser oder ein Reinstwasser sein oder ein Leitungswasser, ein in der Natur vorkommendes Wasser, ein destilliertes Wasser, ein demineralisiertes Wasser und/oder ein Reinstwasser enthalten.

Die Stärke oder das Stärkederivat kann aus Knollenpflanzen, Getreidepflanzen und/oder Erbsen gewonnen sein. Beispielsweise ist die Stärke oder das Stärkederivat aus Kartoffeln, Süßkartoffeln, Maniok, Gerste, Mais, Roggen, Sorghum, Reis, Triticale und/oder Weizen gewonnen. Das Polysaccharid basierend auf Mannose und/oder Galactose kann ein Guaran oder Guaranderivat sein, welches beispielsweise aus der Guarbohne gewonnen ist. Das Polysaccharid basierend auf Mannose und/oder Galactose kann ferner ein Carubin oder Carubinderivat sein, welches beispielsweise aus dem Samen des Johannisbrotbaumes gewonnen ist.

Bei einer Ausführungsform enthält das Mulchmaterial einen Verzögerer. Dadurch ist einem ungewollten, verfrühten Aushärten des Mulchmaterials entgegengewirkt. Der Verzögerer kann ein Phosphat, wie beispielsweise Natriumphosphat, sein oder enthalten.

Bei einer weiteren Ausführungsform enthält das Mulchmaterial einen Emulgator. Durch den Emulgator ist eine Vermengung des Triglycerids mit dem Wasser begünstigt. Der Emulgator kann ein Glycerin sein oder enthalten.

Bei einer Ausführungsform enthält das Mulchmaterial ferner wenigstens einen Füllstoff. Beispielsweise ist Zellulose und/oder wenigstens ein Zellulosederivat und/oder wenigstens ein Silikat und/oder wenigstens ein Mehl und/oder wenigstens eine Kreide und/oder Kork und/oder Aktivkohle und/oder Kieselgur als Füllstoff enthalten. Dadurch ist erreicht, dass das Mulchmaterial in seinen mechanischen Eigenschaften verbessert ist. Es kann eine höhere Reißfestigkeit und/oder eine verbesserte Reißdehnung erreicht werden. Durch den Füllstoff ergeben sich zudem geringere Produktions-/Materialkosten, da der Füllstoff selbst relativ kostengünstig ist.

Ferner kann es vorgesehen sein, dass der Füllstoff aus Fasern besteht oder Fasern aufweist. Es hat sich gezeigt, dass durch die Zugabe von Fasern die mechanische Stabilität des Mulchmaterials verbessert ist.

Beispielsweise ist ein aus Langfasern, insbesondere Zellulose-Langfasern, bestehender oder Langfasern, insbesondere Zellulose-Langfasern, enthaltender Füllstoff vorgesehen. Dem Füllstoff kann ein Dispergiermittel, beispielsweise Ligninsulfonat, und/oder ein Glycerin zur Feuchthaltung zugegeben sein. Es wurde gefunden, dass durch einen solchen Langfaser-Füllstoff das hergestellte Material hinsichtlich der Reißfestigkeit und/oder der Reißdehnung verbessert ist.

Insgesamt hat sich gezeigt, dass mit zunehmender Länge der Fasern das Mulchmaterial elastischer wurde. Es hat sich ferner gezeigt, dass durch das Dispergiermittel eine etwaige Klümpchenbildung der Langfasern weitestgehend verhindert wird. Auch hat es gezeigt, dass durch das Glycerin die Trocknung bzw. der Abbindevorgang im Zuge der Herstellung des Materials positiv beeinflusst ist.

Ergänzend oder alternativ kann es vorgesehen sein, dass ein aus Kurzfasern oder mittellangen Fasern bestehender oder Kurzfasern und/oder mittellange Fasern enthaltender Füllstoff, insbesondere Zellulose, vorgesehen ist. Es wurde gefunden, dass ein derartiger Füllstoff sich vorteilhaft auf die Verarbeitung des Mulchmaterials auswirkt. Beispielsweise lässt sich das Mulchmaterial aufgrund eines solchen Füllstoffs ohne weiteres durch Sprühen auftragen, ohne dass es zu einem Verstopfen der Düsen des Sprühgerätes aufgrund der Fasern kommt.

Der Füllstoff kann ferner aus einer Kombination von Langfasern und Kurzfasern und gegebenenfalls mittellangen Fasern gebildet sein. Es hat sich gezeigt, dass dadurch die Reißfestigkeit und die Reißdehnung des hergestellten Materials verbessert sind. Auch hat es sich gezeigt, dass das Gemisch in seinem Verformungsverhalten verbessert ist.

Die Langfasern, Kurzfasern und/oder mittellangen Fasern lassen sich kostengünstig bereitstellen, wenn nach einer Ausführungsform es sich um Fasern der Zellulose oder des Zellulosederivats handelt.

Unter der Bezeichnung "Langfaser" sind in der vorliegenden Offenbarung insbesondere Fasern, beispielsweise Naturfasern, zu verstehen, die eine durchschnittliche Länge ab etwa 1000 Mikrometer aufweisen. Unter der Bezeichnung "Kurzfaser" sind in der vorliegenden Offenbarung insbesondere Fasern zu verstehen, welche eine durchschnittliche Länge von etwa 20 bis etwa 200 Mikrometer aufweisen. Unter der Bezeichnung "mittellange Faser" sind in der vorliegenden Offenbarung insbesondere Fasern zu verstehen, welche eine durchschnittliche Länge von etwa 200 bis etwa 1000 Mikrometer aufweisen.

Bei einer weiteren Ausführungsform enthält das Mulchmaterial wenigstens ein Feuchthaltemittel. Insbesondere dient das Feuchthaltemittel zum Feuchthalten des Mulchmaterials. Es hat sich gezeigt, dass bei dem Mulchmaterial eine Rissbildung aufgrund einer Übertrocknung begünstigt ist. Es hat sich ferner gezeigt, dass der Zusatz des Feuchthaltemittels einer Rissbildung wirkungsvoll entgegenwirkt. Das Feuchthaltemittel kann aus der Gruppe der Alditolen ausgewählt sein. Mit derartigen Feuchthaltemitteln konnte ein wirkungsvoller Effekt gegen Rissbildung beobachtet werden. Das Feuchthaltemittel ist beispielsweise Sorbitol oder enthält Sorbitol.

Bei einer weiteren Ausführungsform enthält das Mulchmaterial wenigstens ein Konservierungsmittel, um einer verfrühten Schimmelbildung bzw. einem verfrühten Wachstum von Mikroorganismen auf dem Mulchmaterial wirkungsvoll entgegenzuwirken. Das wenigstens eine Konservierungsmittel kann ein Benzoat, eine Carbonsäure, ein Salz einer Carbonsäure, ein Tannin, eine Tanninsäure, ein Salz einer Tanninsäure, ein Kaliumhydroxid, ein Natriumhydroxid und/oder ein Chitosan sein oder enthalten.

Bei dem vorgeschlagenen Mulchmaterial handelt es sich bevorzugt um ein Festmaterial und/oder ein Material mit einer festen Oberfläche. Bevorzugt liegt dieser Zustand zumindest vor, wenn das Mulchmaterial auf den zu behandelten Boden aufgebracht ist. Dadurch ist im Hinblick auf Regenereignisse und/oder einer Beregnung des mit dem Mulchmaterial bedeckten Bodens einem möglichen Wegwaschen oder Auswaschen des Mulchmaterials entgegengewirkt.

Insbesondere bildet das Mulchmaterial eine Schicht aus oder ist eingerichtet, eine Schicht auszubilden. Beispielsweise bildet das Mulchmaterial eine den zu behandelnden Boden abdeckende bzw. bedeckende Mulchschicht und/oder Deckschicht aus oder ist eingerichtet, eine solche Schicht auszubilden. Insbesondere kommt der Schicht im Hinblick auf den Boden oder etwaigem darauf befindlichen Bewuchs eine mulchende Wirkung zu. Unter "mulchende Wirkung" ist in der vorliegenden Offenbarung insbesondere eine Bewuchs unterdrückende Wirkung zu verstehen. Bevorzugt ist die Schicht derart stabil, insbesondere verformbar, dass die mulchende Wirkung der Schicht erhalten bleibt oder weitgehend erhalten bleibt, beispielsweise wenn der mit der Schicht bedeckte Boden von Tieren begangen wird.

Beispielsweise ist das Mulchmaterial ein ausgehärtetes oder abgebundenes Festmaterial. Beispielsweise befindet sich das Mulchmaterial in einem solchen Zustand, dass es nicht oder nicht mehr oder weitgehend nicht oder weitgehend nicht mehr klebrig ist. Dadurch ist der Situation entgegengewirkt, dass das Mulchmaterial an den Füßen von Mensch und/oder Tier hängenbleibt und dadurch die mulchende Wirkung des Mulchmaterials bzw. der aufgebrachten Mulchschicht beeinträchtigt ist. Auch ist dadurch der Situation entgegengewirkt, dass beispielsweise Insekten an dem Mulchmaterial bzw. der aufgebrachten Mulchschicht hängenbleiben und daran verenden.

Beispielsweise handelt es sich bei dem Mulchmaterial um ein Material, das in einem Verarbeitungszustand eine flüssige Konsistenz aufweist und später aushärtet bzw. abbindet. Dadurch ergeben sich zum einen die vorstehend beschriebenen Vorteile, wenn das Mulchmaterial als Festmaterial vorliegt. Zum anderen ist dadurch ein Aufbringen des Mulchmaterials auf den zu behandelnden Boden begünstigt. Beispielsweise liegt das Mulchmaterial in fließfähiger Form vor. Dadurch ist es begünstigt, das Mulchmaterial durch Spritzen oder Sprühen auf einen zu behandelnden Boden aufbringen.

Maßgebend ist insbesondere, dass das Mulchmaterial, insbesondere das Festmaterial bzw. das ausgehärtete oder abgebundene Festmaterial, eine so hohe Viskosität aufweist, dass es nicht mehr fließfähig bzw. flüssig ist. Bevorzugt ist das Mulchmaterial so konzipiert, dass diese Viskosität bereits nach mehreren Minuten des Aufbringens auf den zu behandelnden Boden erreicht ist und kein fließfähiger Zustand mehr vorliegt. Dadurch liegt bereits kurzzeitig, beispielsweise nach einem Aufspritzen oder Aufsprühen des Mulchmaterials auf den zu behandelnden Boden, eine nicht mehr fließfähige, vorzugsweise feste Mulchschicht vor, welche die vorstehend beschriebenen Eigenschaften aufweist.

Nach einem weiteren Aspekt wird ein Mehrkomponentensystem bereitgestellt, welches zur Herstellung eines Mulchmaterials geeignet ist oder dient. Bei dem Mulchmaterial kann es sich um das vorstehend beschriebene Mulchmaterial handeln.

Das Mehrkomponentensystem umfasst wenigstens zwei Komponenten oder besteht aus zwei Komponenten. Beispielsweise ist wenigstens einer der wenigstens zwei Komponenten als Suspension vorgelegt. Die wenigstens zwei Komponenten sind, vorzugsweise jeweils, arm an Kautschuk oder frei von Kautschuk. Auch sind die wenigstens zwei Komponenten, vorzugsweise jeweils, arm an Protein oder frei von Protein.

Bei dem Mehrkomponentensystem ist es vorgesehen, dass eine der wenigstens zwei Komponenten ein Polyuronid und/oder ein Derivat einer Polyuronsäure enthält, um durch Zusammenbringen mit Wasser ein Netzwerk auszubilden. Weiter ist es vorgesehen, dass wenigstens eine der wenigstens zwei Komponenten ein Gelierhilfsmittel enthält. Weiter ist es vorgesehen, dass wenigstens eine der wenigstens zwei Komponenten ein Triglycerid und insbesondere ein Glycerin enthält. Auch ist es vorgesehen, dass wenigstens eine der wenigstens zwei Komponenten eine Stärke und/oder ein Stärkederivat und/oder ein Polysaccharid basierend auf Mannose und/oder Galactose enthält.

Bei dem Polyuronid kann es sich um das vorstehend im Zusammenhang mit dem Mulchmaterial beschriebene Polyuronid handeln. Bei dem Derivat einer Polyuronsäure kann es sich um das vorstehend im Zusammenhang mit dem Mulchmaterial beschriebene Derivat einer Polyuronsäure handeln. Bei dem Gelierhilfsmittel kann es sich um das vorstehend im Zusammenhang mit dem Mulchmaterial beschriebene Gelierhilfsmittel handeln. Bei dem Triglycerid kann es sich um das vorstehend im Zusammenhang mit dem Mulchmaterial beschriebene Triglycerid handeln. Bei dem Glycerin kann es sich um das vorstehend im Zusammenhang mit dem Mulchmaterial beschriebene Glycerin handeln. Bei der Stärke kann es sich um die vorstehend im Zusammenhang mit dem Mulchmaterial beschriebene Stärke handeln. Bei dem Stärkederivat kann es sich um das vorstehend im Zusammenhang mit dem Mulchmaterial beschriebene Stärkederivat handeln. Bei dem Polysaccharid basierend auf Mannose und/oder Galactose kann es sich um das vorstehend im Zusammenhang mit dem Mulchmaterial beschriebene Polysaccharid basierend auf Mannose und/oder Galactose handeln.

Durch die Aufteilung in die wenigstens zwei Komponenten ist es ermöglicht, dass eine das Mulchmaterial bildende Reaktion erst einsetzt, wenn die wenigstens zwei Komponenten zusammengebracht werden. Es bietet sich daher an, die wenigstens zwei Komponenten voneinander reaktionsinhibierend getrennt anzuordnen. Dadurch ergeben sich Vorteile hinsichtlich Lagerung und/oder Haltbarkeit und/oder Verarbeitung und/oder Handhabbarkeit. Beispielsweise kann eine Zusammenbringung der wenigstens zwei Komponenten erst kurz vor dem Aufbringen auf dem zu behandelnden Boden erfolgen.

Bei einer Ausführungsform ist es vorgesehen, dass wenigstens eine der wenigstens zwei Komponenten einen Füllstoff enthält. Bei dem Füllstoff kann es sich um den vorstehend im Zusammenhang mit dem Mulchmaterial beschriebenen Füllstoff handeln.

Beispielsweise ist der Füllstoff derjenigen Komponente mit dem Polyuronid bzw. dem Derivat der Polyuronsäure zugeordnet. Beispielsweise besteht diese Komponente aus dem Triglycerid und/oder dem Glycerin, aus dem Polyuronid und/oder dem Derivat der Polyuronsäure, aus dem Gelierhilfsmittel und aus dem Füllstoff. Eine mögliche Ausgestaltung dieser Ausführungsform besteht darin, dass diese Komponente ein Pflanzenöl, ein Alginat, ein Calciumsalz und eine aus Fasern bestehende oder Fasern aufweisende Zellulose enthält oder daraus besteht.

Beispielsweise enthält eine andere der wenigstens zwei Komponenten Wasser. Bei dem Wasser kann es sich um das vorstehend im Zusammenhang mit dem Mulchmaterial beschriebene Wasser handeln. Beispielsweise hat das Wasser einen Anteil von 20 bis 75 Prozent, bezogen auf die Gesamtmasse des Mehrkomponentensystems. Es wurde gefunden, dass ein aus den wenigstens zwei Komponenten gebildetes Gemenge sich gut auf den Boden aufbringen lässt, insbesondere durch Spitzen oder Sprühen auftragen lässt, wenn das Gemenge einen solchen Wasseranteil aufweist.

Bei einer Ausführungsform enthält die andere bzw. die eine andere Komponente ferner die Stärke bzw. das Stärkederivat bzw. das Polysaccharid basierend auf Mannose und/oder Galactose. Beispielsweise besteht die andere bzw. die eine andere Komponente aus dem Wasser und aus der Stärke und/oder dem Stärkederivat und/oder dem Polysaccharid basierend auf Mannose und/oder Galactose.

Bei einer weiteren Ausführungsform ist es vorgesehen, dass wenigstens eine der wenigstens zwei Komponenten einen Emulgator und/oder einen Verzögerer und/oder ein Konservierungsmittel und/oder ein Feuchthaltemittel enthält. Bei dem Emulgator kann es sich um den vorstehend im Zusammenhang mit dem Mulchmaterial beschriebenen Emulgator handeln. Bei dem Verzögerer kann es sich um den vorstehend im Zusammenhang mit dem Mulchmaterial beschriebenen Verzögerer handeln. Bei dem Konservierungsmittel kann es sich um das vorstehend im Zusammenhang mit dem Mulchmaterial beschriebene Konservierungsmittel handeln. Bei dem Feuchthaltemittel kann es sich um das vorstehend im Zusammenhang mit dem Mulchmaterial beschriebene Feuchthaltemittel handeln.

Beispielsweise sind der Emulgator und/oder der Verzögerer und/oder das Konservierungsmittel und/oder das Feuchthaltemittel derjenigen Komponente mit dem Wasser zugeordnet. Beispielsweise besteht diese Komponente aus der Stärke und/oder dem Stärkederivat und/oder dem Polysaccharid basierend auf Mannose und/oder Galactose und aus dem Wasser und/oder aus dem Emulgator und/oder aus dem Verzögerer und/oder aus dem Konservierungsmittel und/oder aus dem Feuchthaltemittel. Eine mögliche Ausgestaltung dieser Ausführungsform besteht darin, dass diese Komponente die Stärke, das Wasser, gegebenenfalls ein Glycerin, ein Natriumphosphat, ein Natriumbenzoat und ein Sorbitol enthält oder daraus besteht.

Bei einer möglichen Ausführungsform ist das Mehrkomponentensystem, ein Zweikomponentensystem mit zwei Komponenten, insbesondere ausschließlich zwei Komponenten. Eine der zwei Komponenten umfasst oder besteht aus einem Pflanzenöl, einem Alginat, einem Calciumsulfat und einer Zellulose. Die Zellulose liegt beispielsweise in Faserform vor. Beispielsweise handelt es sich bei den Fasern um Kurzfasern, welche beispielsweise eine durchschnittliche Länge von etwa 100 Mikrometer haben. Diese Komponente liegt beispielsweise als Suspension vor. Beispielsweise haben das Pflanzenöl einen Anteil von 26 % bis 30 %, das Alginat einen Anteil von 1,1 % bis 1,3 %, das Calciumsulfat einen Anteil von 1,3 % bis 1,5 % und die Zellulose einen Anteil von 2 % bis 4 %, jeweils bezogen auf die Feuchtmasse des Mehrkomponentensystems.

Die andere der zwei Komponenten umfasst oder besteht aus einer Stärke, einem Wasser, wie beispielsweise Leitungswasser, einem Glycerin, einem Natriumphosphat, einem Natriumbenzoat und einem Sorbitol. Auch diese Komponente liegt beispielsweise als Suspension vor. Beispielsweise haben die Stärke einen Anteil von 11 % bis 12,3 %, das Wasser einen Anteil von 44 % bis 50 %, das Glycerin einen Anteil von 4 % bis 5 %, das Natriumphosphat einen Anteil von 0,2 % bis 0,3 %, das Natriumbenzoat einen Anteil von 0,5 % bis 2,5 % und das Sorbitol einen Anteil von 2 % bis 2,5 %, jeweils bezogen auf die Feuchtmasse des Mehrkomponentensystems.

Eine Rezeptur mit den vorstehenden beiden Komponenten hat sich in Versuchen als wirkungsvoll für die zu erreichenden Wirkungen bei der Verarbeitung des Mehrkomponentensystems und im Hinblick auf das hergestellte Mulchmaterial erwiesen.

Bevorzugt hat die das Wasser aufweisende Komponente, also die wässrige Komponente, insbesondere die andere oder die eine andere Komponente, einen pH-Wert im neutralen oder basischen Bereich. Es hat sich gezeigt, dass nach einem Zusammenbringen der Komponenten und einer dadurch einsetzenden Reaktion das Gemenge bzw. Gemisch bereits nach kurzer Zeit abbindet, wenn die wässrige Komponente einen pH-Wert in einem solchen Bereich hat. Um diesen Effekt zu erzielen, sollte der pH-Wert der wässrigen Komponente zwischen 6,5 und 14,0, insbesondere zwischen 7,5 und 12,5, vorzugsweise zwischen 8 und 11, beispielsweise bei 8,0, 8,5, 9,0, 9,5, 10,0, 10,5 oder 11,0 liegen.

Es konnte beobachtet werden, dass das Gemenge bzw. Gemisch bereits nach wenigen Minuten, beispielsweise nach einer bis fünf Minuten, eine so große Viskosität erreicht hatte, dass es nicht mehr fließfähig war. Das Gemisch bzw. Gemenge lag also in dieser kurzen Zeit in einem Verarbeitungszustand vor, in dem es beispielsweise durch Spritzen oder Sprühen beispielsweise auf eine zu behandelnde Fläche aufgebracht werden konnte. Bereits nach dieser kurzen Zeit hatte das Mulchmaterial den vorzugsweise angestrebten Festzustand erreicht.

Nach einem weiteren Aspekt wird eine Vorrichtung zum Aufbringen eines flüssigen Mulchmaterials auf einem Boden bereitgestellt. Bei dem Mulchmaterial kann es sich um das vorstehend beschriebene Mulchmaterial handeln. Insbesondere befindet sich das Mulchmaterial bzw. das vorstehend beschriebene Mulchmaterial in einem Verarbeitungszustand, in dem es fließfähig ist.

Die Vorrichtung, welche auch als Aufbringvorrichtung zu bezeichnen ist, umfasst wenigstens zwei Düsen, welche zum Erzeugen eines Strahles dienen. Die wenigstens zwei Düsen können an einem Trägerkörper, insbesondere einem gemeinsamen Trägerkörper angeordnet sein. Die wenigstens zwei Düsen sind zueinander derart ausgerichtet, dass der Strahl wenigstens einer der wenigstens zwei Düsen und der Strahl einer anderen der wenigstens zwei Düsen zumindest teilweise einen gleichen Bereich des Bodens abdecken, beispielsweise um auf dem Boden das Mulchmaterial ohne Spritzschatten aufzubringen und/oder einem etwaigen Spritzschatten entgegenzuwirken und/oder etwaigen Wuchs von Unkraut zu erreichen, insbesondere vollständig zu erreichen.

Bei einer weiteren Ausführungsform sind die wenigstens zwei Düsen zueinander derart ausgerichtet, dass der Strahl der wenigstens einen Düse und der Strahl der anderen Düse aufeinander zu gerichtet sind, insbesondere sich kreuzen. Dadurch ist ein Aufbringen ohne Spritzschatten bzw. ohne relevantem Spritzschatten begünstigt, selbst wenn ein Wuchs von Unkraut bereits vorliegt.

Beispielsweise sind die wenigstens zwei Düsen zueinander derart ausgerichtet, dass der Strahl der wenigstens einen Düse und der Strahl der anderen Düse in einem Winkel zwischen 60 Grad und 140 Grad, insbesondere in einem Winkel zwischen 80 Grad und 130 Grad, insbesondere in einem Winkel zwischen 100 Grad und 130 Grad, insbesondere in einem Winkel zwischen 110 Grad und 130 Grad, vorzugsweise in einem Winkel von etwa 120 Grad zueinander vorliegen, wobei vorzugsweise die Winkelhalbierende in Lotrichtung verläuft. Es hat sich gezeigt, dass dadurch ein zufriedenstellendes Spitzergebnis begünstigt ist.

Beispielsweise ist wenigstens eine der wenigstens zwei Düsen eine Flachstrahldüse. Beispielsweise sind einzelne oder alle der wenigstens zwei Düsen als Flachstrahldüse ausgebildet. Dadurch ist eine relativ scharfe Abgrenzung der auszutragenden Komponenten zum nicht zu behandelnden Bereich des Bodens möglich. Außerdem weist die Flachstrahldüse ein ausreichend gleichmäßiges Spritzbild auf.

Grundsätzlich können auch drei oder mehr Düsen vorgesehen sein, deren Strahl zumindest teilweise einen gleichen Bereich des Bodens abdecken, beispielsweise um auf dem Boden das Mulchmaterial weitgehend ohne Spritzschatten aufzubringen und/oder etwaiges Unkraut weitgehend ohne Spritzschatten zu erreichen.

Eine weitere mögliche Ausführungsform besteht darin, dass die Vorrichtung als mobile Vorrichtung ausgebildet ist, welche eine Vorschubbewegung ausführen kann. Beispielsweise weist die mobile Vorrichtung dazu wenigstens ein, vorzugsweise mehrere Laufräder auf, um die Vorrichtung auf einem Untergrund zu fahren. Ergänzend oder alternativ kann die Vorrichtung wenigstens ein Kupplungselement aufweisen, um die Vorrichtung an einem Fahrzeug anzubringen. Die Vorschubbewegung wird dann von dem Fahrzeug ausgeführt. Das Fahrzeug kann ein landwirtschaftliches Fahrzeug, wie beispielsweise ein Traktor sein.

Bei einer weiteren Ausführungsform ist es vorgesehen, dass in Richtung der Vorschubbewegung gesehen, die wenigstens zwei Düsen hintereinanderliegend angeordnet sind, insbesondere in einer Reihe hintereinanderliegend angeordnet sind. Beispielsweise weisen die wenigstens zwei Düsen jeweils einen Ausgang auf, aus welchem der jeweils zugehörige Strahl austritt. Beispielweise ist es vorgesehen, dass in Richtung der Vorschubbewegung gesehen, die Ausgänge der wenigstens zwei Düsen hintereinanderliegend angeordnet sind. Auch diese Maßnahmen zielen darauf ab, etwaige Spritzschatten zu vermindern oder gar ganz zu vermeiden.

Bei einer weiteren Ausführungsform ist wenigstens eine der wenigstens zwei Düsen eingerichtet, in vertikaler Richtung bewegt zu werden, beispielsweise um bei Unebenheiten des Bodens einen vorgegebenen Abstand zwischen der wenigstens einen Düse und dem Boden aufrecht zu erhalten bzw. beizubehalten, insbesondere konstant zu halten, wenn sich die Vorrichtung in der Vorschubbewegung befindet.

Bei einer ersten Alternative umfasst die Vorrichtung wenigstens zwei Behältnisse, welche jeweils eine Komponente des vorstehend beschriebenen Mehrkomponentensystems bevorraten. Die Behältnisse sind jeweils mit einer der wenigstens zwei Düsen strömungsverbunden, um jeweils eine der wenigstens zwei Düsen mit einer der Komponenten des Mehrkomponentensystems zu beaufschlagen. Dadurch findet ein Zusammenbringen der Komponenten des Mehrkomponentensystems erst nach einem Austreten der Komponenten aus der jeweils zugehörigen Düse statt, beispielsweise wenn die Strahlen der Düse aufeinandertreffen und/oder wenn die Komponenten auf dem einen Bereich des Bodens aufeinandertreffen. Eine Mischkammer zum Zusammenbringen der Komponenten des Mehrkomponentensystems ist bei dieser Ausführungsform nicht notwendig und kann eingespart werden.

Auch können drei Düsen oder wenigstens drei Düsen vorgesehen sein, welche zum Erzeugen eines Strahles dienen und zueinander derart ausgerichtet sind, dass der Strahl einer ersten der drei Düsen, der Strahl einer zweiten der drei Düsen und der Strahl einer dritten der drei Düsen zumindest teilweise einen gleichen Bereich des Bodens abdecken. Bei einer Ausgestaltung ist es vorgesehen, dass die erste Düse mit einem der Behältnisse strömungsverbunden ist und beispielsweise die zweite Düse und die dritte Düse, vorzugsweise jeweils, mit dem anderen der Behältnisse strömungsverbunden sind. Es kann in diesem Fall vorgesehen sein, dass die erste Düse zwischen der zweiten Düse und der dritten Düse angeordnet ist. Es hat sich gezeigt, dass dadurch ein Vermengen der Komponenten miteinander begünstigt ist.

Beispielsweise sind die zweite Düse und die dritte Düse derart zueinander ausgerichtet, dass der Strahl der zweiten Düse und der Strahl der dritten Düse in einem Winkel zwischen 60 Grad und 140 Grad, insbesondere in einem Winkel zwischen 80 Grad und 130 Grad, insbesondere in einem Winkel zwischen 100 Grad und 130 Grad, insbesondere in einem Winkel zwischen 110 Grad und 130 Grad, vorzugsweise in einem Winkel von etwa 120 Grad zueinander vorliegen. Beispielsweise bildet der Strahl der dazwischenliegenden ersten Düse eine Winkelhalbierende in Bezug auf den Winkel zwischen dem Strahl der zweiten Düse und dem Strahl der dritten Düse, wobei die Winkelhalbierende beispielsweise in Lotrichtung verläuft. Beispielsweise ist es ferner vorgesehen, dass in Richtung der Vorschubbewegung gesehen, die erste Düse, die zweite Düse und die dritte Düse hintereinanderliegend angeordnet sind. Es hat sich gezeigt, dass dadurch eine zufriedenstellende Vermengung der Komponenten erreicht wird und sich das erwünschte Mulchmaterial im Zuge des Reaktionsprozesses durch die Komponenten ausbildet.

Bei einer zweiten Alternative umfasst die Vorrichtung wenigstens eine Mischkammer. Die wenigstens eine Mischkammer ist eingerichtet, die Komponenten eines Mehrkomponentensystems miteinander zu vermengen. Beispielsweise weist die wenigstens eine Mischkammer dazu eine Rühreinrichtung oder ein vorzugsweise statisches Mischelement auf, um die Komponenten des Mehrkomponentensystems miteinander zu vermengen und/oder zu vermischen. Bei dem Mehrkomponentensystem handelt es sich um das vorstehend beschriebene Mehrkomponentensystem. Es ist vorgesehen, dass die wenigstens eine Mischkammer mit den wenigstens zwei Düsen strömungsverbunden ist, um die wenigstens zwei Düsen mit dem Gemenge aus der wenigstens einen Mischkammer zu beaufschlagen.

Nach einem weiteren Aspekt wird ein Verfahren zum Aufbringen eines flüssigen bzw. fließfähigen Mulchmaterials, wie beispielsweise dem vorstehend beschriebenen Mulchmaterial, vorgeschlagen. Insbesondere befindet sich das Mulchmaterial bzw. das vorstehend beschriebene Mulchmaterial in einem Verarbeitungszustand, in dem es fließfähig ist. Das Verfahren umfasst den Schritt, dass das vorstehend beschriebene Mehrkomponentensystem bereitgestellt wird.

Das Verfahren umfasst ferner den Schritt, dass wenigstens ein erster Strahl erzeugt wird, welcher eine erste Komponente des Mehrkomponentensystems aufweist, und dass wenigstens ein zweiter Strahl erzeugt wird, welcher eine zweite Komponente des Mehrkomponentensystems aufweist, wobei der wenigstens eine erste Strahl und der wenigstens eine zweite Strahl zumindest teilweise einen gleichen Bereich des Bodens abdecken. Zur Durchführung des Verfahrens kann die vorstehend beschriebene Vorrichtung genutzt sein.

Nach einem weiteren Aspekt wird eine Verwendung des vorstehend beschriebenen Mulchmaterials zum Aufbringen auf vorzugsweise bewirtschaftete Böden im Pflanzenbau, insbesondere im Weinbau, im Obstbau und/oder im Gemüsebau vorgeschlagen.

Nach einem weiteren Aspekt wird eine Verwendung des vorstehend beschriebenen Mehrkomponentensystem zur Herstellung eines Mulchmaterials, wie beispielsweise dem vorstehend beschriebenen Mulchmaterial, vorgeschlagen.

Nach einem weiteren Aspekt wird eine Verwendung der vorstehend beschriebenen Vorrichtung zum Aufbringen bzw. Ausbringen des vorstehend beschriebenen Mulchmaterials oder zum Aufbringen bzw. Ausbringen der Komponenten des vorstehend beschriebenen Mehrkomponentensystems vorgeschlagen.

Ein bevorzugtes Ausführungsbeispiel für das Mehrkomponentensystem wird nachfolgend näher erläutert, ohne dadurch den Umfang der Offenbarung auf die im Folgenden angegebene Rezeptur zu beschränken.

Das bevorzugte Ausführungsbeispiel eines Mehrkomponentensystems betrifft ein aus zwei Komponenten A und B bestehendes Zweikomponentensystem. Das Zweikomponentensystem kann zur Herstellung eines Mulchmaterials genutzt werden. Ein solches Mulchmaterial kann zur Unterdrückung von Unkraut eingesetzt werden, wenn es auf einem Boden aufgebracht wird. Ein mögliches Anwendungsgebiet für das Mulchmaterial ist der Bereich des Pflanzenbaus.

Die Komponenten A und B liegen bevorzugt jeweils als Suspension vor. Bevorzugt enthält die Komponente A ein Rapsöl, ein Alginat, ein Calciumsulfat und eine vorzugsweise faserige Zellulose oder besteht daraus. Bevorzugt enthält die Komponente B eine Stärke, Wasser, ein Glycerin, Natriumphosphat, Natriumbenzoat und Sorbitol oder besteht daraus.

Tabelle 1 gibt ein Beispiel für die Massenanteile der vorgenannten Bestandteile der Komponenten A und B des Zweikomponentensystems, angegeben als prozentualer Massenanteil und jeweils bezogen auf die Feuchtmasse des Zweikomponentensystems.

**Tabelle 1**

| Komponente | Bestandteil | Anteil in % Feuchtmasse |
|---|---|---|
| A | Rapsöl | 30,1 |
| | Alginat | 1,2 |
| | Calciumsulfat | 1,5 |
| | Zellulose als Faser | 2,3 |
| B | Stärke | 12,3 |
| | Wasser | 44,6 |
| | Glycerin | 4,4 |
| | Natriumphosphat | 0,3 |
| | Natriumbenzoat | 1,1 |
| | Sorbitol | 2,2 |

Die Komponente A ist eine Rapsöl-Zellulose-Suspension. Die Zellulosefasern dienen dem Speichern von Feuchtigkeit und Pflanzenöl. Außerdem geben die Zellulosefasern dem Mulchmaterial eine zusätzliche Festigkeit. Die verwendeten Fasern sind bevorzugt durchschnittlich etwa 100 µm lang. Darüber hinaus enthält die Komponente A mit dem Alginat ein Geliermittel und mit dem Calciumsulfat ein Gelierhilfsmittel, um ein rasches Festwerden nach dem Zusammenbringen der Komponenten A und B zu realisieren. Das Alginat ist beispielsweise ein Natriumalginat.

Die Komponente B ist bevorzugt eine kalte, wässrige Stärkesuspension. Die Komponente B enthält Glycerin als Weichmacher, um die benötigte Elastizität für das Mulchmaterial zu erlangen und sich so auf Bewegungen des Bodens bzw. Untergrunds einzustellen, auf dem das Mulchmaterial aufgebracht wird. Das Natriumphosphat dient als Verzögerer für den Gelierprozess und wird genutzt, um die Zeit des Aushärtens des Mulchmaterials nach dem Vermischen der Komponenten des Zweikomponentensystems zu beeinflussen.

Das Natriumbenzoat dient als Konservierungsmittel, um die für Schimmel und/oder andere Mikroorganismen anfälligen Bestandteile des Zweikomponentensystems zu konservieren. Ferner dient das Sorbitol als Feuchthaltemittel, um zu verhindern, dass das Mulchmaterial übertrocknet und dadurch eine Rissbildung an der Oberfläche stattfindet.

Bevorzugt liegen sämtliche Bestandteile des Zweikomponentensystems bis auf das Pflanzenöl und das Wasser als Feststoff vor. Dadurch ergeben sich Vorteile für die Lagerung und den Transport. Das Wasser und das Rapsöl bilden jeweils flüssige Bestandteile. Das Zweikomponentensystem besteht im Wesentlichen aus nachwachsenden Rohstoffen, sodass auf erdölbasierte Rohstoffe verzichtet werden kann.

Weitere Einzelheiten und Merkmale ergeben sich aus der nachfolgenden Beschreibung weiterer Ausführungsbeispiele anhand der Zeichnung. Es zeigen:
- Fig. 1: eine mögliche Ausführungsform einer Vorrichtung zum Aufbringen eines flüssigen Mulchmaterials auf einem Boden in einer Seitenansicht,
- Fig. 2: eine weitere Ausführungsform einer Vorrichtung zum Aufbringen eines flüssigen Mulchmaterials auf einem Boden in einer ersten Düsenanordnung, und
- Fig. 3: eine nochmals weitere Ausführungsform einer Vorrichtung zum Aufbringen eines flüssigen Mulchmaterials auf einem Boden in einer zweiten Düsenanordnung.

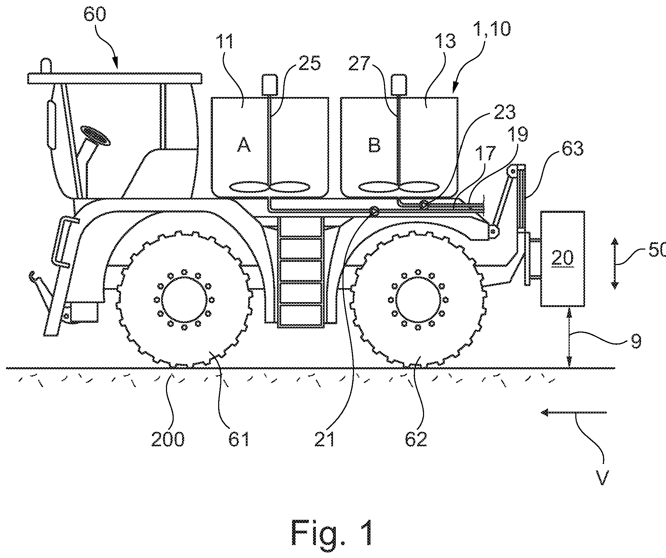

Figur 1 zeigt - in schematischer Darstellung - eine mögliche Ausführungsform einer Vorrichtung 1 zum Aufbringen eines (in der Figur 1 nicht dargestellten) flüssigen Mulchmaterials auf einem Boden 200. Die Vorrichtung 1 ist beispielsweise dazu eingerichtet, vor Ort, also am Ort des Aufbringens des Mulchmaterials auf den Boden, das Mulchmaterial aus den Komponenten eines Mehrkomponentensystems herzustellen.

Die Vorrichtung 1 weist wenigstens zwei Behältnisse 11, 13 auf, welche eingerichtet sind, jeweils eine Komponente des Mehrkomponentensystems aufzunehmen. Die wenigstens zwei Behältnisse 11, 13 sind als Vorratsbehältnis für die jeweils zugehörige Komponente des Mehrkomponentensystems ausgebildet. In das eine Vorratsbehältnis 11 ist eine Komponente A des Mehrkomponentensystems aufgenommen. In das andere Vorratsbehältnis 13 ist eine Komponente B des Mehrkomponentensystems aufgenommen.

Die Vorrichtung 1 weist ferner eine Düseneinrichtung 20 auf, über welche die Komponenten A und B des Mehrkomponentensystems ausgetragen werden können. Bevorzugt ist die Düseneinrichtung 20 beispielsweise über eine erste Leitung 17 mit dem einen Behältnis 11 und beispielsweise über eine zweite Leitung 19 mit dem anderen Behältnis 13 strömungsverbunden, was in der Figur 1 lediglich schematisch angedeutet ist.

Bevorzugt ist der Strömungsverbindung zwischen dem einen Behältnis 11 und der Düseneinrichtung 20 eine erste Fördereinrichtung 21 zugeordnet, welche vorzugsweise eingerichtet ist, die in dem einen Behältnis 11 befindliche Komponente A zu der Düseneinrichtung 20 zu fördern. Bevorzugt ist der Strömungsverbindung zwischen dem anderen Behältnis 13 und der Düseneinrichtung 20 eine zweite Fördereinrichtung 23 zugeordnet, welche vorzugsweise dazu eingerichtet ist, die in dem anderen Behältnis 13 befindliche Komponente B zu der Düseneinrichtung 20 zu fördern.

Bevorzugt ist dem einen Behältnis 11 eine erste Rühreinrichtung 25 zugeordnet, um die darin befindliche Komponente A umrühren zu können. Bevorzugt ist dem anderen Behältnis 13 eine zweite Rühreinrichtung 27 zugeordnet, um die darin befindliche Komponente B umrühren zu können. Auf diese Weise lassen sich die Komponenten A und B in den Behältnissen 11 und 13 homogen halten. Die erste Rühreinrichtung 25 kann als vorzugsweise statisches Mischelement ausgebildet sein. Auch die zweite Rühreinrichtung 27 kann als vorzugsweise statisches Mischelement ausgebildet sein.

Bevorzugt ist die Vorrichtung 1 als mobile Vorrichtung 10 ausgebildet, welche eine Vorschubbewegung V ausführen kann. Beispielsweise nutzt dazu die Vorrichtung 1 ein Kraftfahrzeug 60. Beispielsweise handelt es sich bei dem Kraftfahrzeug 60 um eine landwirtschaftliche Zugmaschine oder dergleichen. Das Kraftfahrzeug weist beispielsweise wenigstens ein, vorzugsweise mehrere Laufräder 61, 62 auf, um auf dem Boden 200 fahren zu können.

Bevorzugt ist die Düseneinrichtung 20 an einem Trägerkörper 63 angeordnet, welcher vorzugsweise ortsfest bezüglich des Kraftfahrzeuges 60 ist oder gehalten werden kann. Bevorzugt ist die Düseneinrichtung 20 eingerichtet, gegenüber dem Trägerkörper 63 in vertikaler Richtung gemäß Pfeil 50 nach oben und/oder nach unten bewegt zu werden, um bei Unebenheiten des Bodens 200 einen vorgegebenen Abstand 9 zwischen der Düseneinrichtung 20 und dem Boden 200 konstant zu halten, wenn sich die Vorrichtung 1 bzw. 10 in der Vorschubbewegung V bewegt.

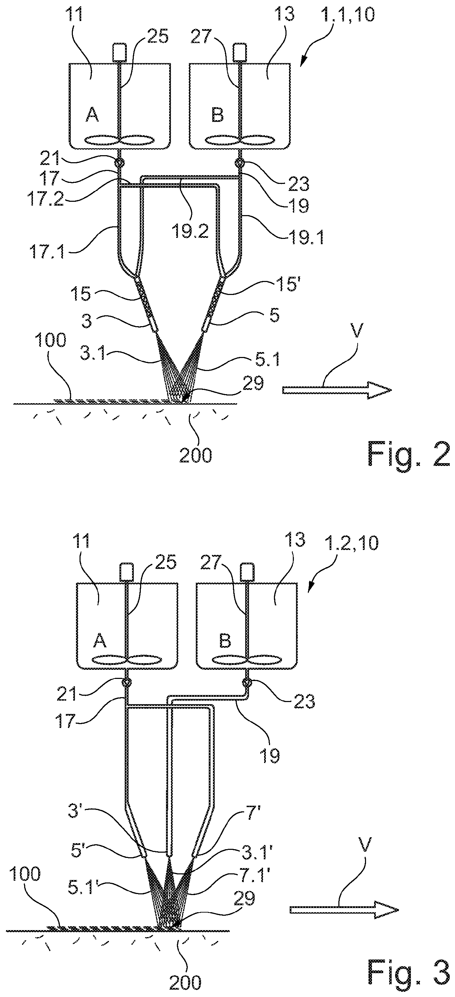

Figur 2 zeigt in einer vereinfachten schematischen Darstellung eine mögliche Ausführungsform einer Vorrichtung 1.1 zum Aufbringen eines flüssigen Mulchmaterials 100 auf den Boden 200. Bauteile der Vorrichtung 1.1 der Figur 2, welche mit Bauteilen der Vorrichtung 1 der Figur 1 baugleich oder funktionsgleich sind, sind mit gleichen Bezugszeichen versehen; insofern wird auf die Beschreibung zu der Vorrichtung 1 der Figur 1 verwiesen.

Wie aus der Figur 2 ersichtlich ist, weist die Vorrichtung 1.1 wenigstens eine, vorzugsweise zwei Mischkammern 15, 15' auf. Bevorzugt sind die zwei Mischkammern 15, 15', beispielsweise über die erste Leitung 17 und die zweite Leitung 19, sowohl mit dem einen Behältnis 11 als auch mit dem anderen Behältnis 13 strömungsverbunden. Beispielsweise weist dazu die erste Leitung 17 eine Verzweigung auf, durch welche sich die erste Leitung 17 in zwei Leitungsabschnitte 17.1 und 17.2 aufteilt. Beispielweise weist dazu ferner die zweite Leitung 19 eine Verzweigung auf, durch welche sich die zweite Leitung 19 in zwei Leitungsabschnitte 19.1 und 19.2 aufteilt.

Die Mischkammern 15, 15' sind jeweils einer Düse 3, 5 zugeordnet, sodass die in den Mischkammern 15, 15' zusammengebrachten Komponenten A und B über die jeweils zugehörige Düse 3 bzw. 5 als Strahl 3.1 bzw. 5.1 austreten. Die Düsen 3, 5 sind zueinander derart ausgerichtet, dass der Strahl 3.1 der einen Düse 3 und der Strahl 5.1 der anderen Düse 5 aufeinander zu gerichtet sind, insbesondere sich kreuzen, und zumindest teilweise einen gleichen Bereich 29 des Bodens 200 abdecken. Bevorzugt sind, in Richtung der Vorschubbewegung V gesehen, die Düsen 3, 5 hintereinanderliegend angeordnet.

Bei der Vorrichtung 1.1 wird aufgrund der Mischkammern 15, 15' und dem darin vorgenommenen Zusammenbringen der Komponenten A und B bereits zumindest teilweise das flüssige Mulchmaterial gebildet, wenn das Gemenge aus den Mischkammern 15, 15' die jeweils zugehörigen Düsen 3, 5 erreicht. Durch die Anordnung der beiden Düsen 3, 5 ist es ermöglicht, das Mulchmaterial 100 auf dem Boden 200 und gegebenenfalls auf bereits vorhandenen Bewuchs von Unkraut aufzubringen, wobei einem etwaigen Sprühschatten entgegengewirkt ist. Durch das Bewegen der Vorrichtung 1.1 in Richtung der Vorschubbewegung V wird der Boden 200 mittels der Düsen 3, 5 derart beaufschlagt, dass ein in Richtung der Vorschubbewegung V verlaufender Streifen mit dem Mulchmaterial entsteht.

Figur 3 zeigt in einer vereinfachten schematischen Darstellung eine weitere mögliche Ausführungsform einer Vorrichtung 1.2 zum Aufbringen eines flüssigen Mulchmaterials 100 auf den Boden 200. Bauteile der Vorrichtung 1.2 der Figur 3, welche mit Bauteilen der Vorrichtung 1 der Figur 1 baugleich oder funktionsgleich sind, sind mit gleichen Bezugszeichen versehen; insofern wird auf die Beschreibung zu der Vorrichtung 1 der Figur 1 verwiesen.

Wie aus der Figur 3 ersichtlich ist, kann die Vorrichtung 1.2 ohne die in der Figur 2 beschriebenen Mischkammern realisiert sein. Die Vorrichtung 1.2 weist wenigstens zwei, vorzugsweise drei Düsen 3', 5', 7' auf, welche zum Erzeugen eines Strahles 3.1', 5.1', 7.1' dienen. Die erste Düse 3' ist mit einem der Behältnisse 11, 13 und die zweite Düse 5' sowie die dritte Düse 7' sind mit dem anderen der Behältnisse 11, 13 strömungsverbunden. Dadurch findet bis zu den Düsen 3', 5', 7' kein Zusammenbringen der Komponenten A und B statt. Im Strahl 3.1', 5.1', 7.1' der Düsen 3', 5', 7' liegt vielmehr lediglich eine der Komponenten A, B vor.

Die drei Düsen 3', 5', 7' sind zueinander derart ausgerichtet, dass der Strahl 3.1' der ersten der drei Düsen 3', 5', 7', der Strahl 5.1' der zweiten der drei Düsen 3', 5', 7' und der Strahl 7.1' der dritten der drei Düsen 3', 5', 7' zumindest teilweise einen gleichen Bereich 29 des Bodens 200 abdecken und/oder sich kreuzen. Auf diese Weise wird das Mulchmaterial erst gebildet, wenn die Komponenten A und B nach dem Austreten aus den entsprechenden Düsen 3', 5', 7' zusammenkommen, also beispielsweise wenn die Komponenten A und B auf dem Boden und/oder auf einem Bewuchs von Unkraut aufeinandertreffen.

Bevorzugt sind die Düsen 3', 5', 7' in Richtung der Vorschubbewegung V gesehen, hintereinanderliegend angeordnet. Bevorzugt ist die erste Düse 3' zwischen der zweiten Düse 5' und der dritten Düse 7' angeordnet. Bevorzugt sind die zweite Düse 5' und die dritte Düse 7' zueinander ausgerichtet, sodass der Strahl 5.1' der zweiten Düse 5' und der Strahl 7.1' der dritten Düse 7.1' aufeinander zu gerichtet sind, beispielsweise in einem Winkel zwischen 60 Grad und 140 Grad vorliegen. Bevorzugt bildet der Strahl 3.1' der dazwischenliegenden ersten Düse 3' eine Winkelhalbierende in Bezug auf den Winkel zwischen dem Strahl 5.1' der zweiten Düse 5' und dem Strahl 7.1' der dritten Düse 7', wobei die Winkelhalbierende beispielsweise in Lotrichtung verläuft.

Bei den in der vorliegenden Offenbarung benannten Eckwerten für die Bereiche sind die Eckwerte selbst für den jeweiligen Bereich mitumfasst. Auch sind durch die benannten Bereiche beliebige darin enthaltene Einzelwerte mitumfasst.

### Bezugszeichenliste

- 1: Vorrichtung
- 1.1: Vorrichtung
- 1.2: Vorrichtung
- 10: mobile Vorrichtung

- 3: Düse
- 3.1: Strahl
- 5: Düse
- 5.1: Strahl

- 3': Düse
- 3.1': Strahl
- 5': Düse
- 5.1': Strahl
- 7': Düse
- 7.1': Strahl

- 9: Abstand
- 11: Behältnis
- 13: Behältnis
- 15: Mischkammer
- 15': Mischkammer
- 17: erste Leitung
- 17.1: Leitungsabschnitt
- 17.2: Leitungsabschnitt
- 19: zweite Leitung
- 19.1: Leitungsabschnitt
- 19.2: Leitungsabschnitt
- 20: Düseneinrichtung
- 21: erste Fördereinrichtung
- 23: zweite Fördereinrichtung
- 25: erste Rühreinrichtung
- 27: zweite Rühreinrichtung
- 29: Bereich

- 50: Pfeil

- 60: Kraftfahrzeug
- 61: Laufrad
- 62: Laufrad
- 63: Trägerkörper

- 100: Mulchmaterial
- 200: Boden

- A: Komponente
- B: Komponente

- V: Vorschubbewegung

## Patentansprüche

1. Mulchmaterial zur Unterdrückung von Unkraut, enthaltend:
ein Triglycerid;
ein Polyuronid oder ein Derivat einer Polyuronsäure;
ein Gelierhilfsmittel; und
eine Stärke oder ein Stärkederivat oder ein Polysaccharid basierend auf Mannose und/oder Galactose;
wobei das Mulchmaterial arm an Kautschuk oder frei von Kautschuk ist, und wobei das Mulchmaterial arm an Protein oder frei von Protein ist.

2. Mulchmaterial nach Anspruch 1, wobei das Triglycerid ein Öl oder ein Fett tierischer oder pflanzlicher Herkunft ist oder enthält.

3. Mulchmaterial nach Anspruch 1 oder 2, enthaltend ein Glycerin, welches insbesondere tierischer oder pflanzlicher Herkunft ist.

4. Mulchmaterial nach einem der Ansprüche 1 bis 3, wobei das Polyuronid ein Alginat oder ein Pektin ist oder enthält.

5. Mulchmaterial nach einem der Ansprüche 1 bis 3, wobei das Derivat der Polyuronsäure ein Derivat einer Alginsäure oder ein Derivat einer Galacturonsäure ist oder enthält.

6. Mulchmaterial nach einem der vorhergehenden Ansprüche, enthaltend wenigstens einen aus Fasern bestehenden oder Fasern enthaltenden Füllstoff, welcher insbesondere eine Zellulose oder ein Zellulosederivat ist oder enthält.

7. Mehrkomponentensystem zur Herstellung eines Mulchmaterials, insbesondere eines Mulchmaterials nach einem der vorhergehenden Ansprüche, umfassend
wenigstens zwei Komponenten, welche arm an Kautschuk oder frei von Kautschuk sind, und welche arm an Protein oder frei von Protein sind,
wobei eine der wenigstens zwei Komponenten ein Polyuronid oder ein Derivat einer Polyuronsäure enthält, um durch Zusammenbringen mit Wasser ein Netzwerk auszubilden,
wobei wenigstens eine der wenigstens zwei Komponenten ein Gelierhilfsmittel enthält,
wobei wenigstens eine der wenigstens zwei Komponenten ein Triglycerid enthält, und
wobei wenigstens eine der wenigstens zwei Komponenten eine Stärke oder ein Stärkederivat oder ein Polysaccharid basierend auf Mannose und/oder Galactose enthält.

8. Mehrkomponentensystem nach Anspruch 7, wobei die eine der wenigstens zwei Komponenten das Triglycerid, das Polyuronid oder das Derivat der Polyuronsäure, das Gelierhilfsmittel und einen Füllstoff enthält oder daraus besteht.

9. Mehrkomponentensystem nach Anspruch 7 oder 8, wobei die eine der wenigstens zwei Komponenten ein Pflanzenöl, ein Alginat, ein Calciumsalz und eine aus Fasern bestehende oder Fasern aufweisende Zellulose enthält oder daraus besteht.

10. Vorrichtung (1; 1.2) zum Aufbringen eines flüssigen Mulchmaterials (100) auf einem Boden (200), umfassend
wenigstens zwei Düsen (3', 5'), welche zum Erzeugen eines Strahles (3.1', 5.1') dienen und zueinander derart ausgerichtet sind, dass der Strahl (3.1') wenigstens einer der wenigstens zwei Düsen (3', 5') und der Strahl (5.1') einer anderen der wenigstens zwei Düsen (3', 5') zumindest teilweise einen gleichen Bereich (29) des Bodens (200) abdecken,
wenigstens zwei Behältnisse (11, 13), welche jeweils eine Komponente eines Mehrkomponentensystems nach einem der Ansprüche 7 bis 9 bevorraten,
wobei die Behältnisse (11, 13) jeweils mit einer der wenigstens zwei Düsen (3', 5') strömungsverbunden sind, um jeweils eine der wenigstens zwei Düsen (3', 5') mit einer der Komponenten der Mehrkomponentensystems zu beaufschlagen.

11. Vorrichtung (1; 1.1) zum Aufbringen eines flüssigen Mulchmaterials (100) auf einem Boden (200), umfassend
wenigstens zwei Düsen (3, 5), welche zum Erzeugen eines Strahles (3.1, 5.1) dienen und zueinander derart ausgerichtet sind, dass der Strahl (3.1) wenigstens einer der wenigstens zwei Düsen (3, 5) und der Strahl (5.1) einer anderen der wenigstens zwei Düsen (3, 5) zumindest teilweise einen gleichen Bereich (29) des Bodens (200) abdecken,
wenigstens eine Mischkammer (15; 15'), welche eingerichtet ist, die Komponenten eines Mehrkomponentensystems nach einem der Ansprüche 7 bis 9 miteinander zu vermengen,
wobei die wenigstens eine Mischkammer (15; 15') mit den wenigstens zwei Düsen (3, 5) strömungsverbunden ist, um die wenigstens zwei Düsen (3, 5) mit dem Gemenge aus der Mischkammer (5) zu beaufschlagen.

12. Verfahren zum Aufbringen eines flüssigen Mulchmaterials (100) auf einem Boden (200), umfassend die Schritte oder bestehend aus den Schritten:
i) Bereitstellen eines Mehrkomponentensystems nach einem der Ansprüche 7 bis 9;
ii) Erzeugen wenigstens eines ersten Strahles (3.1) mit einer ersten Komponente des Mehrkomponentensystems und Erzeugen wenigstens eines zweiten Strahles (5.1) mit einer zweiten Komponente des Mehrkomponentensystems,
wobei der wenigstens eine erste Strahl (3.1) und der wenigstens eine zweite Strahl (5.1) zumindest teilweise einen gleichen Bereich (29) des Bodens (200) abdecken.

13. Verwendung eines Mulchmaterials nach einem der Ansprüche 1 bis 6 zum Aufbringen auf Böden im Pflanzenbau, insbesondere im Weinbau, im Obstbau und/oder im Gemüsebau.

14. Verwendung eines Mehrkomponentensystems nach einem der Ansprüche 7 bis 9 zur Herstellung eines Mulchmaterials, insbesondere eines Mulchmaterials nach einem der Ansprüche 1 bis 6.

15. Verwendung einer Vorrichtung (1; 1.1; 1.2) nach Anspruch 10 oder 11 zum Aufbringen eines Mulchmaterials nach einem der Ansprüche 1 bis 6 oder zum Aufbringen der Komponenten eines Mehrkomponentensystems nach einem der Ansprüche 7 bis 9.

## Claims

1. Mulch material for suppression of weeds, containing:
a triglyceride;
a polyuronide or a derivative of a polyuronic acid;
a co-gellant; and
a starch or starch derivative or a polysaccharide based on mannose and/or galactose;
wherein the mulch material has little or no rubber, and wherein the mulch material has little or no protein.

2. Mulch material according to claim 1, wherein the triglyceride is or contains an oil or a fat of animal or plant derivative.

3. Mulch material according to claim 1 or 2, containing a glycerine, which in particular is an animal or plant derivative.

4. Mulch material according to one of claims 1 to 3, wherein the polyuronide is or contains an alginate or a pectin.

5. Mulch material according to one of claims 1 to 3, wherein the derivative of the polyuronic acid is or contains a derivative of alginic acid or a derivative of galacturonic acid.

6. Mulch material according to one of the preceding claims, containing at least one filling material consisting of fibres or containing fibres, which in particular is or contains a cellulose or a cellulose derivative.

7. Multi-component system for producing a mulch material, in particular a mulch material according to one of the preceding claims, comprising
at least two components, which have little or no rubber, and which have little or no protein,
wherein one of the at least two components contains a polyuronide or a derivative of a polyuronic acid, in order to form a network by combining with water,
wherein at least one of the at least two components contains a co-gellant,
wherein at least one of the at least two components contains a triglyceride, and
wherein at least one of the at least two components contains a starch or starch derivative or a polysaccharide based on mannose and/or galactose.

8. Multi-component system according to claim 7, wherein the one of the at least two components contains or consists of the triglyceride, the polyuronide or the derivative of the polyuronic acid, the co-gellant and a filling material.

9. Multi-component system according to claim 7 or 8, wherein the one of the at least two components contains or consists of a plant oil, an alginate, a calcium salt and a cellulose consisting of fibres or having fibres.

10. Device (1; 1.2) for applying a fluid mulch material (100) to a base (200), comprising
at least two nozzles (3', 5'), which serve to create a beam (3.1', 5.1') and are aligned to each other in such a way that the beam (3.1') of at least one of the at least two nozzles (3', 5') and the beam (5.1') of another of the at least two nozzles (3', 5') at least partially cover an equal region (29) of the base (200),
at least two containers (11, 13), which each store a component of a multi-component system according to one of claims 7 to 9,
wherein the containers (11, 13) are each flow-connected to one of the at least two nozzles (3', 5'), in order to respectively pressurise one of the at least two nozzles (3', 5') with one of the components of the multi-component system.

11. Device (1; 1.1) for applying a fluid mulch material (100) to a base (200), comprising
at least two nozzles (3, 5), which serve to create a beam (3.1, 5.1) and are aligned to each other in such a way that the beam (3.1) of at least one of the at least two nozzles (3, 5) and the beam (5.1) of another of the at least two nozzles (3, 5) at least partially cover an equal region (29) of the base (200),
at least one mixing chamber (15; 15'), which is set up to combine the components of a multi-component system according to one of claims 7 to 9 together,
wherein the at least one mixing chamber (15; 15') is flow-connected to the at least two nozzles (3, 5), in order to pressurise the at least two nozzles (3, 5) with the mixture from the mixing chamber (5).

12. Method for applying a fluid mulch material (100) to a base (200), comprising the steps or consisting of the steps:
i) providing a multi-component system according to one of claims 7 to 9;
ii) creating at least one first beam (3.1) having a first component of the multi-component system and creating at least one second beam (5.1) having a second component of the multi-component system,
wherein the at least one first beam (3.1) and the at least one second beam (5.1) at least partially cover an equal region (29) of the base (200).

13. Use of a mulch material according to one of claims 1 to 6 for application bases in crop production, in particular in viticulture, in fruit growing and/or in vegetable growing.

14. Use of a multi-component system according to one of claims 7 to 9 for producing a mulch material, in particular a mulch material according to one of claims 1 to 6.

15. Use of a device (1; 1.1; 1.2) according to claim 10 or 11 for applying a mulch material according to one of claims 1 to 6 or for applying the components of a multi-component system according to one of claims 7 to 9.

## Revendications

1. Matériau de paillage pour supprimer les mauvaises herbes, contenant:
un triglycéride;
un polyuronide ou un dérivé d'un acide polyuronique;
un agent gélifiant; et
un amidon ou un dérivé d'amidon ou un polysaccharide à base de mannose et/ou de galactose;
ledit matériau de paillage étant pauvre en caoutchouc ou exempt de caoutchouc, et ledit matériau de paillage étant pauvre en protéines ou exempt de protéines.

2. Matériau de paillage selon la revendication 1, dans lequel le triglycéride est ou contient une huile ou une graisse d'origine animale ou végétale.

3. Matériau de paillage selon la revendication 1 ou 2, contenant une glycérine qui est notamment d'origine animale ou végétale.

4. Matériau de paillage selon l'une des revendications 1 à 3, dans lequel le polyuronide est ou contient un alginate ou une pectine.

5. Matériau de paillage selon l'une des revendications 1 à 3, dans lequel le dérivé d'acide polyuronique est ou contient un dérivé d'acide alginique ou un dérivé d'acide galacturonique.

6. Matériau de paillage selon l'une des revendications précédentes, contenant au moins une charge constituée de fibres ou en contenant, et consistant notamment en une cellulose ou un dérivé de cellulose ou en contenant.

7. Système multicomposant pour la production d'un matériau de paillage, notamment un matériau de paillage selon l'une des revendications précédentes, comprenant
au moins deux composants pauvres en caoutchouc ou exempts de caoutchouc et pauvres en protéines ou exempts de protéines,
l'un desdits au moins deux composants contenant un polyuronide ou un dérivé d'un acide polyuronique afin de former un réseau en étant mélangé avec de l'eau,
au moins un desdits au moins deux composants contenant un agent gélifiant,
au moins un desdits au moins deux composants contenant un triglycéride, et
au moins un desdits au moins deux composants contenant un amidon ou un dérivé d'amidon ou un polysaccharide à base de mannose et/ou de galactose.

8. Système multicomposant selon la revendication 7, dans lequel l'un des au moins deux composants contient ou est constitué du triglycéride, du polyuronide ou du dérivé d'acide polyuronique, de l'agent gélifiant et d'une charge.

9. Système multicomposant selon la revendication 7 ou 8, dans lequel l'un des au moins deux composants contient ou est constitué d'une huile végétale, d'un alginate, d'un sel de calcium et d'une cellulose constituée de fibres ou en comprenant.

10. Dispositif (1; 1.2) d'application d'un matériau de paillage liquide (100) sur un sol (200), comprenant
au moins deux buses (3', 5') servant à produire un jet (3.1', 5.1') et agencées l'une par rapport à l'autre de telle façon que le jet (3.1') d'au moins une des au moins deux buses (3', 5') et le jet (5.1') d'une autre des au moins deux buses (3', 5') couvrent au moins partiellement une même zone (29) du sol (200), et
au moins deux récipients (11, 13), chacun contenant un composant d'un système multicomposant selon l'une des revendications 7 à 9,
lesdits récipients (11, 13) étant chacun reliés fluidiquement à l'une des au moins deux buses (3', 5') afin d'alimenter l'une des au moins deux buses (3', 5') en l'un des composants du système multicomposant.

11. Dispositif (1; 1.1) d'application d'un matériau de paillage liquide (100) sur un sol (200), comprenant
au moins deux buses (3, 5) servant à produire un jet (3.1, 5.1) et agencées l'une par rapport à l'autre de telle façon que le jet (3.1) d'au moins une des au moins deux buses (3, 5) et le jet (5.1) d'une autre des au moins deux buses (3, 5) couvrent au moins partiellement une même zone (29) du sol (200), et
au moins une chambre de mélange (15, 15') conçue pour mélanger les composants d'un système multicomposant selon l'une des revendications 7 à 9,
ladite au moins une chambre de mélange (15, 15') étant reliée fluidiquement auxdites au moins deux buses (3, 5) afin d'alimenter les au moins deux buses (3, 5) en mélange provenant de la chambre de mélange (5).

12. Procédé d'application d'un matériau de paillage liquide (100) sur un sol (200) comprenant les étapes suivantes ou constitué de celles-ci:
i) fourniture d'un système multicomposant selon l'une quelconque des revendications 7 à 9;
ii) production d'au moins un premier jet (3.1) d'un premier composant du système multicomposant et production d'au moins un deuxième jet (5.1) d'un deuxième composant du système multicomposant,
ledit au moins un premier jet (3.1) et ledit au moins un deuxième jet (5.1) recouvrant au moins partiellement une même zone (29) du sol (200).

13. Utilisation d'un matériau de paillage selon l'une des revendications 1 à 6 destiné à une application sur des sols dans le domaine de la culture végétale, notamment en viticulture, arboriculture fruitière et/ou culture maraîchère.

14. Utilisation d'un système multicomposant selon l'une des revendications 7 à 9 pour la fabrication d'un matériau de paillage, notamment un matériau de paillage selon l'une des revendications 1 à 6.

15. Utilisation d'un dispositif (1; 1.1; 1.2) selon la revendication 10 ou 11 pour l'application d'un matériau de paillage selon l'une des revendications 1 à 6 ou pour l'application des composants d'un système multicomposant selon l'une des revendications 7 à 9.
